# EUROPEAN PATENT SPECIFICATION

(11) **EP 3 280 264 B1**
(45) Date of publication and mention of the grant of the patent: **13.01.2021**
(21) Application number: 16717297.2
(22) Date of filing: 08.04.2016
(51) Int. Cl.: A21D 6/00, A21D 8/04

(54) **METHOD FOR PREPARING A DOUGH**
VERFAHREN ZUR HERSTELLUNG EINES TEIGS
PROCÉDÉ DE PRÉPARATION D'UNE PÂTE

(30) Priority: 10.04.2015 EP 15163227
(43) Date of publication of application: 14.02.2018
(73) Proprietor: DSM IP Assets B.V., 6411 TE Heerlen (NL)
(72) Inventor: HENNINK, Henk, 6100 AA Echt (NL); STRUBBE, Lambertus Gerhard, 6100 AA Echt (NL); DIRKS, Cornelius Antonius Maria, 6100 AA Echt (NL)
(74) Representative: DSM Intellectual Property
(86) International application number: PCT/EP2016/057687
(87) International publication number: WO 2016/162454

(56) References cited:
- WO-A1-02/24926
- WO-A1-2012/130969
- CN-A- 101 744 181
- US-A1- 2004 241 283
- US-A1- 2011 091 599
- MARÃA EUGENIA STEFFOLANI ET AL: "Use of Enzymes to Minimize Dough Freezing Damage", FOOD AND BIOPROCESS TECHNOLOGY ; AN INTERNATIONAL JOURNAL, SPRINGER-VERLAG, NEW YORK, vol. 5, no. 6, 1 March 2011 (2011-03-01), pages 2242-2255, XP035089292, ISSN: 1935-5149, DOI: 10.1007/S11947-011-0538-2

## Description

### Field of the invention

The present invention relates to a method for preparing dough, in particular to a method for preparing frozen dough.

### Background of the invention

In order to separate dough production and baking and sales of bread products it is common to freeze dough pieces after the dough is formed. The dough having a reduced temperature of below 0 °C is referred to herein as "frozen dough". Often the dough is placed in a freezer with a temperature of about -40°C this way the core temperature is quickly and uniformly reduced to below -7°C: this process is known as shock-freezing.

After shock freezing the dough is stored at a temperature in a range of -15 to -20 degrees Celsius, for examples at -18 to -19 degrees Celsius for several weeks or months during which period distribution to the baking location can take place. Alternatively the temperature of the dough is lowered more gradually to a reduced temperature in the range of -18 to -20 degrees Celsius.

Frozen dough has several advantages for the bakery industry such as a reduction of night labour, better flexibility in production and allowing bakeries to offer a broader assortment of fresh breads.

Frozen dough is subject to stress due to the freezing and frequently shows different behaviour as compared to dough that is kept at a temperature of above 0 °C during the whole bread making process. Frozen dough frequently shows extended fermentation (proofing) times after thawing, reduced dough stability, reduced baked product volume, loss of shape, coarse crumb structure, blister formation, increased and uneven crust browning.

In order to reduce the negative effect of freezing, specially developed and/or selected ingredients are applied in frozen dough. In order to optimize gluten strength, increased levels of oxidative ingredients, such as ascorbic acid are used. Also the enzyme glucose oxidase (GOX), such as the commercially available *Aspergillus* glucose oxidase, is commonly used in frozen dough to improve dough strength, to improve the baked product's appearance, volume and/or shape.
US2007/0014891 describes frozen, developed dough compositions, and related methods. Dough compositions described include a yeast ingredient, an enzyme that facilitates the production of hydrogen peroxide in the dough composition (preferably glucose oxidase), and optional acid and base chemical leavening agent.

Also xylanase, such as the commercially available *Aspergillus* xylanase, is commonly used in frozen dough for example to improve volume of a baked product.

EP 493 850 describes deep-frozen dough comprising xylanase.

WO 02/24926 describes Talaromyces xylanases and their use in baking.

CN 101 744 181 A and WO 2012/130969 A1 describe the use of both glucose oxidase and xylanase in frozen dough.

### Summary of the invention

In one aspect the present invention relates to a method for preparing a dough, which method comprises:
a) preparing the dough including the step of adding a *Penicillium* glucose oxidase and a *Talaromyces* xylanase to at least one dough ingredient; and
b) cooling the dough to a temperature in the range of -40 to -5 degrees Celsius, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

In another aspect the invention relates to a composition comprising a *Penicillium* glucose oxidase and a *Talaromyces* xylanase, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

In a further aspect not according to the invention and present for illustration purpose only this disclosure relates to a dough comprising a *Penicillium* glucose oxidase and a *Talaromyces* xylanase, in a further aspect the dough is a frozen dough. Another aspect not according to the invention and present for illustration purpose only this disclosure also relates to a baked product a method for preparing a baked product.

Further the invention relates to the use of a *Penicillium* glucose oxidase and a *Talaromyces* xylanase both as defined above for improving properties of a dough which has been stored frozen or a baked product prepared from a dough which has been stored frozen.

### Description of the sequence listing

SEQ ID NO: 1 sets out the amino acid sequence of a *Penicillium chrysogenum* glucose oxidase. Amino acids 1 to 18 represent the signal sequence used for secretion of the *Penicillium chrysogenum* glucose oxidase used in the invention (amino acids 19 - 604).
SEQ ID NO: 2 sets out the cDNA sequence encoding a *Penicillium chrysogenum* glucose oxidase depicted used in the invention. Nucleotides 1 to 54 encode the signal sequence, nucleotides 55 to 1816 encode the mature glucose oxidase, including a translational termination sequence (5'-TAAA-3') at the 3'-terminus.
SEQ ID NO: 3 sets out the amino acid sequence of a *Talaromyces emersonii* xylanase. Amino acids 1 to 22 represent the signal sequence used for secretion of the *Talaromyces emersonii* xylanase used in the invention (amino acids 23-408).
SEQ ID NO: 4 sets out the cDNA sequence encoding a *Talaromyces emersonii* xylansase depicted used in the invention. Nucleotides 1 to 66 encode the signal sequence, nucleotides 67 to 1227 encode the mature xylanase, including a translational termination sequence (5'-TAA-3') at the 3'-terminus.

### Detailed description of the invention

Throughout the present specification and the accompanying claims, the words "comprise", "include" and "having" and variations such as "comprises", "comprising", "includes" and "including" are to be interpreted inclusively. That is, these words are intended to convey the possible inclusion of other elements or integers not specifically recited, where the context allows.

The articles "a" and "an" are used herein to refer to one or to more than one (i.e. to one or at least one) of the grammatical object of the article. By way of example, "an element" may mean one element or more than one element.

The present invention relates to a method for improving properties of a dough which has been stored frozen dough and/or of baked products made from such dough.

The present invention relates to a method for improving a dough, which method comprises including a *Penicillium* glucose oxidase and a *Talaromyces* xylanase, both as defined in the claims, in the dough during preparation of the dough.

The present invention relates to a method for improving baked products made from a dough which has been stored frozen, which method comprises including a *Penicillium* glucose oxidase and a *Talaromyces* xylanase, both as defined in the claims, in the dough during preparation of the dough.

In an embodiment of the method according to the invention, the method is a method for preparing a dough, which method comprises the steps:
a) preparing the dough including the step of adding a *Penicillium* glucose oxidase and a *Talaromyces* xylanase to at least one dough ingredient; and
b) cooling the dough to a temperature in the range of -40 to -5 degrees Celsius, preferably to a temperature in the range of -35 to -15 degrees Celsius, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.
In an aspect of the method according to the invention, the method is a method, wherein the dough is cooled as an un-proofed dough.
In an aspect of the method according to the invention, the method is a method, wherein the dough is cooled as a pre-proofed dough. In this aspect the dough is pre-proofed, and the method includes pre-proofing the dough before the dough is cooled. Before baking the dough, and thus after frozen storage and thawing of the dough the dough is proofed to the full extent. Typically pre-proofing is proofing up to 30% of the total proofing time. Pre-proofing may take for example 15 to 30 minutes.

In an aspect of the method according to the invention, the method is a method for preparing a dough, which method comprises the steps:
a) preparing the dough including the step of adding a *Penicillium* glucose oxidase and a *Talaromyces* xylanase to at least one dough ingredient; and
b) cooling the dough at a temperature in the range of -40 to -30 degrees Celsius, for at least 20 minutes, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

In an aspect of step b) the dough is cooled at a temperature in the range of -40 to -30 degrees Celsius, for a period of time from 20 to 180 minutes, in an aspect for a period of time from 30 to 120 minutes, for a period of time from 40 to 100 minutes for a period of time from 45 to 90 minutes.

In an embodiment of the method according to the invention, the method is a method for preparing a frozen dough, which method comprises:
a) preparing the dough including the step of adding a *Penicillium* glucose oxidase and a *Talaromyces* xylanase to at least one dough ingredient; and
b) cooling the dough to a temperature in the range of -40 to -5 degrees Celsius, preferably to a temperature in the range of -35 to -15 degrees Celsius, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

In an aspect of the method according to the invention, the method is a method for preparing a frozen dough, which method comprises:
a) preparing the dough including the step of adding a *Penicillium* glucose oxidase and a *Talaromyces* xylanase to at least one dough ingredient; and
b) cooling the dough at a temperature in the range of -40 to -30 degrees Celsius, for at least 20 minutes, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

In an aspect of step b) the dough is cooled at a temperature in the range of -40 to -30 degrees Celsius, for a period of time from 20 to 180 minutes, in an aspect for a period of time from 30 to 120 minutes, for a period of time from 40 to 100 minutes for a period of time from 45 to 90 minutes.

Cooling of the dough is typically done by placing the dough in a freezer set at a temperature of below 0 °C. Such as in a freezer set at a temperature in the range of -40 to -5 degrees Celsius, in an aspect in a freezer set at a temperature in the range of -40 to -15 degrees Celsius, in an aspect in a freezer set at a temperature in the range of -40 to -30 degrees Celsius.

A frozen dough is herein defined as a dough having a temperature in the range of -40 to -5 degrees Celsius. In an aspect the frozen dough has a temperature in the range of -35 to -5 degrees Celsius. In an aspect the frozen dough has a temperature in the range of -35 to -15 degrees Celsius. In an aspect the temperature of the dough is measured on the surface of the dough using for example an infrared thermometer. If the temperature of the surface of the dough is determined as a temperature in the range of -40 to -5 degrees Celsius, the dough is called a frozen dough. Typically a dough of about 500 grams which has been placed in a freezer set at -40 degrees Celsius for 90 minutes, has a core temperature of below -7 degrees Celsius. Storage of the frozen dough may then be at a temperature of for example -18 degrees Celsius, for example in a freezer set at -18 degrees Celsius.

In an aspect of the method according to the invention, the method is a method for preparing a dough which is to be stored frozen, which method comprises:
a) preparing the dough including the step of adding a *Penicillium* glucose oxidase and a *Talaromyces* xylanase to at least one dough ingredient, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3; and
b) cooling the dough to a temperature in the range of -40 to -5 degrees Celsius, preferably to a temperature in the range of -35 to -15 degrees Celsius.

A dough which is stored frozen or frozen storage of a dough is defined herein as a the dough which is stored at a temperature in the range of -40 to -5 degrees Celsius, preferably at a temperature in the range of -35 to -15 degrees Celsius. Typically frozen storage of a dough is storage in a freezer set at a temperature in the range of -40 to -5 degrees Celsius, preferably set at a temperature in the range of -35 to -15 degrees Celsius.

The *Penicillium* glucose oxidase and the *Talaromyces* xylanase, both as defined in the claims, may be added to the at least one dough ingredient separately or as a composition according to the invention in accordance with established baking practices. An additional enzyme or additional enzymes may be dosed in accordance with established baking practices.

In an aspect of the method according to the invention, the method is a method wherein the at least one dough ingredient includes flour and the *Penicillium* glucose oxidase is included or added in an amount of 1 to 100 ppm based on weight of flour.

In an aspect of the method according to the invention, the method is a method wherein the at least one dough ingredient includes flour and the a *Talaromyces* xylanase is included or added in an amount of 1 to 60 ppm based on weight of flour.

In an aspect of the method according to the invention, the method is a method for preparing dough, which method comprises:
a) preparing the dough including the step of incorporating into a dough a *Penicillium* glucose oxidase and a *Talaromyces* xylanase; and
b) cooling the dough to a temperature in the range of -40 to -5 degrees Celsius, preferably to a temperature in the range of -35 to -15 degrees Celcius, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

The phrase "incorporating into the dough" or "including in the dough" is defined herein as adding the enzyme according to the invention to the dough, to any ingredient from which the dough is to be made (i.e. to any dough ingredient), and/or to any mixture of dough ingredients from which the dough is to be made. In other words, the enzyme may be added in any step of the dough preparation and may be added in one, two or more steps. The enzyme is added to the ingredients of a dough that is kneaded and baked to make the baked product using methods well known in the art. See, for example, U.S. Patent No. 4,567,046, EP-A-426,211, JP-A-60-78529, JP-A-62-111629, and JP-A-63-258528.

An enzyme described herein is (or enzymes are) incorporated, included or added in an effective amount. The term "effective amount" is defined herein as an amount of the enzyme that is sufficient for providing a measurable effect on at least one property of interest of the dough and/or baked product. The skilled person is familiar with determining an effective amount of an enzyme such as the *Penicillium* glucose oxidase and the *Talaromyces* xylanase.

Glucose oxidase activity may be determined using assays, such as spectrophotometrically at 450 nm using o-dianisidine as described by Witteveen et al. 1990 ("Glucose oxidase overproducing and negative mutants of Aspergillus niger", Appl. Microbiol. Biotechnol 33:683-686) or a glucose oxidase assay as described in the Food Chemicals Codex (FCC).
Glucose Oxidase activity is preferably determined as Activity expressed in GOU (Glucose Oxidase units) as described herein.

An effective amount of *Penicillium* glucose oxidase includes an amount in the range of 1-100 ppm by weight of flour of a *Penicillium* glucose oxidase having an activity of 3000-3200 Glucose Oxidase units /gram enzyme.

An effective amount of *Penicillium* glucose oxidase includes an amount in the range of 1-60 ppm by weight of flour of a *Penicillium* glucose oxidase having an activity of 3000-3200 Glucose Oxidase units /gram enzyme.

An effective amount of *Penicillium* glucose oxidase includes an amount in the range of 1-100 ppm by weight of flour of a *Penicillium* glucose oxidase having an activity of 3100-3200 Glucose Oxidase units /gram enzyme.

In an aspect an effective amount of *Penicillium* glucose oxidase is from 2 to 400 GOU/ kg flour. In an aspect an effective amount of *Penicillium* glucose oxidase is from 3 to 350 GOU/ kg flour. In an aspect an effective amount of *Penicillium* glucose oxidase is from 4 to 300 GOU/ kg flour. In an aspect an effective amount of *Penicillium* glucose oxidase is from 5 to 250 GOU/ kg flour. In an aspect an effective amount of *Penicillium* glucose oxidase is from 2 to 200 GOU/ kg flour.

Xylanase activity is preferably determined as Activity expressed in XU (xylanase units) described herein.

An effective amount of *Talaromyces* xylanase includes an amount in the range of 1-100 ppm by weight of flour of a *Talaromyces* xylanase having an activity of 1400-1750 XU /gram enzyme.

An effective amount of *Talaromyces* xylanase includes an amount in the range of 1-60 ppm by weight of flour of a *Talaromyces* xylanase having an activity of 1400-1750 XU /gram enzyme.

An effective amount of *Talaromyces* xylanase includes an amount in the range of 1-60 ppm by weight of flour of a *Talaromyces* xylanase having an activity of 1400-1500 XU /gram enzyme.
In an aspect an effective amount of *Talaromyces* xylanase is from 1 to 100 XU / kg flour. In an aspect an effective amount of *Talaromyces* xylanase is from 1 to 80 XU / kg flour. In an aspect an effective amount of *Talaromyces* xylanase is from 2 to 60 XU / kg flour. In an aspect an effective amount of *Talaromyces* xylanase is from 5 to 40 XU / kg flour. In an aspect an effective amount of *Talaromyces* xylanase is from 1 to 30 XU / kg flour.

### XYLANASE

In the context of the present invention, "xylanase" refers to glycosidases (O-glycoside hydrolysases EC 3.2.1.x) which catalyse the endohydrolysis of 1,4-beta-D-xylosidic linkages in xylan.

In an aspect not according to the invention and present for illustration purpose only the xylanase is a *Talaromyces* xylanase, preferably a *Talaromyces emersonii* xylanase, which also can be called a *Rasamsonia emersonii* xylanase. Both *Talaromyces* xylanase and *Rasamsonia* xylanase are names, which can be used interchangeably.

In an aspect not according to the invention and present for illustration purpose only the xylanase is the *Talaromyces emersonii* xylanase polypeptide comprising an amino acid sequence as set out in amino acids 23-408 of SEQ ID NO: 2 as described in WO2002/24926, or a variant thereof having at least 75% identity.

According to the invention the xylanase is the *Talaromyces emersonii* xylanase polypeptide comprising an amino acid sequence having at least 90% identity to the amino acid sequence as set out in amino acids 23-408 of SEQ ID NO: 3.

The xylanase (*Talaromyces or e.g. Aspergillus) may* be comprised in a xylanase preparation comprising or consisting of xylanase. The xylanase preparation comprising xylanase may comprise between 0.001% and 100% w/w xylanase based on total protein. Preferably, the preparation comprises between 1% and 70% w/w xylanase based on total protein. In one embodiment, the xylanase preparation comprises between 1% and 50% w/w xylanase based on total protein. In yet another embodiment, the xylanase preparation comprises between 1% and 30% w/w xylanase based on total protein.

*The Talaromyces* xylanase, may in an aspect not according to the invention and present for illustration purpose only be any *Talaromyces* xylanase. According to the invention the *Talaromyces* xylanase has an amino acid having at least 90%, at least 95%, at least 97%, at least 98% or at least 99% identity to amino acids 23-408 of SEQ ID NO: 3.

In an aspect of the invention the *Talaromyces* xylanase, is a *Talaromyces emersonii* xylanase.

In an aspect of the invention the *Talaromyces* xylanase comprises an amino acid sequence as set out in amino acids 23-408 of SEQ ID NO: 3.

Bakezyme® FXP 1500 from DSM, The Netherlands comprises an amino acid sequence as set out in amino acids 23 to 408 of SEQ ID NO: 3.

The *Talaromyces* xylanase used in the invention may be a variant xylanase having at least 90% identity to but not comprising all of the amino acids of positions 23-408 of SEQ ID NO: 3. For example, the amino acid sequence may be shorter than that theoretically encoded by the nucleic acid sequence, for example in view of amino acids missing from the N- and/or C-terminal end in comparison with the sequence as shown in SEQ ID NO: 3).

The *Talaromyces* xylanase may be a variant of the polypeptide of SEQ ID NO: 3, comprising a substitution, deletion, N- and / or C-terminal truncation and/or insertion at one or more positions of SEQ ID NO: 3.

In another aspect not according to the invention and present for illustration purpose only the amino acid sequence of the *Talaromyces* xylanase has been modified resulting in a further improved expression according the method as described in WO2010/102982.

The *Talaromyces* xylanase may be prepared by transformation of an *Aspergillus* with a construct comprising a cDNA sequence as set out in SEQ ID NO: 4 and subsequent expression of the enzyme.

### GLUCOSE OXIDASE

In the context of the present invention, "glucose oxidase" (EC 1.1.3.4) catalyses the following reaction: β-D-glucose + O₂ = D-glucono-1,5-lactone + H₂O₂. For illustration purpose only any GH (glycoside hydrolase) family 10 xylanase may be suitable. Herein is therefore also described for illustration purpose only and not according to the invention a method for improving a dough, which method comprises including a *Penicillium* glucose oxidase and a GH family 10 xylanase in the dough during preparation of the dough.

A method for preparing a dough which is to be stored frozen for illustration purpose only and not according to the invention may comprise:
a) preparing the dough including the step of adding a *Penicillium* glucose oxidase as described herein and a GH family 10 xylanase to at least one dough ingredient; and
b) cooling the dough to a temperature in the range of -40 to -5 degrees Celsius, preferably to a temperature in the range of -35 to -15 degrees Celsius.

A composition for illustration purpose only and not according to the invention may comprise a *Penicillium* glucose oxidase as described herein and a GH family 10 xylanase.

A use not according to the invention and for illustration purpose only of a *Penicillium* glucose oxidase as described herein and a GH family 10 xylanase may be for improving properties of a dough which has been stored frozen or a baked product prepared from a dough which has been stored frozen.

The glucose oxidase *(Penicillium* or e.g. *Aspergillus)* may be comprised in a glucose oxidase preparation comprising or consisting of glucose oxidase. The glucose oxidase preparation comprising glucose oxidase may comprise between 0.001% and 100% w/w glucose oxidase based on total protein. Preferably, the preparation comprises between 1% and 70% w/w glucose oxidase based on total protein. In one embodiment, the glucose oxidase preparation comprises between 1% and 50% w/w glucose oxidase based on total protein. In yet another embodiment, the preparation glucose oxidase comprises between 1% and 30% w/w glucose oxidase based on total protein

*The Penicillium* glucose oxidase, may in an aspect not according to the invention and for illustration purpose only be any *Penicillium* glucose oxidase. According to the invention the *Penicillium* glucose oxidase has an amino acid having at least 90%, at least 95%, at least 97%, at least 98% or at least 99% identity to amino acids 19-604 of SEQ ID NO: 1.

In an aspect of the invention the *Penicillium* glucose oxidase, is a *Penicillium chrysogenum* glucose oxidase.

In an aspect of the invention the *Penicillium* glucose oxidase comprises an amino acid sequence as set out in to amino acids 19-604 of SEQ ID NO: 1.

Bakezyme® Go Pure from DSM, The Netherlands comprises an amino acid sequence as set out in amino acids 19 to 604 of SEQ ID NO: 1.

The *Penicillium* glucose oxidase used in the invention may be a variant glucose oxidase having at least 90% identity to but not comprising all of the amino acids of positions 19-604 of SEQ ID NO: 1.

For example, the amino acid sequence may be shorter than that theoretically encoded by the nucleic acid sequence, for example in view of amino acids missing from the N- and/or C-terminal end in comparison with the sequence as shown in SEQ ID NO: 1.

The *Penicillium* glucose oxidase may be a variant having at least 90% identity of the polypeptide of SEQ ID NO: 1, comprising a substitution, deletion, N- and / or C-terminal truncation and/or insertion at one or more positions of SEQ ID NO: 1.

In another aspect not according to the invention and present for illustration purpose only the amino acid sequence of the *Penicillium* glucose oxidase has been modified resulting in a further improved expression according the method as described in WO2010/102982.

The *Penicillium* glucose oxidase may be prepared by transformation of an *Aspergillus* with a construct comprising a cDNA sequence as set out in SEQ ID NO: 2 and subsequent expression of the enzyme.

In an aspect of the method according to the invention, the dough is stored frozen for at least 1 week, in an aspect at least 2 weeks, in an aspect at least 1 month, in an aspect at least two months. In an aspect the dough is stored at a temperature in the range of -40 to -5 degrees Celsius, preferably to a temperature in the range of -35 to -15 degrees Celsius for 3 months or more. In an aspect the dough is stored at a temperature in the range of -40 to -5 degrees Celsius, preferably to a temperature in the range of -35 to -15 degrees Celsius for 4 months or more, in an aspect 6 months or more, in an aspect 9 months or more. In an aspect the dough is stored at a temperature in the range of -40 to -5 degrees Celsius, preferably to a temperature in the range of -35 to -15 degrees Celsius for 12 months or more.

After the dough has been stored frozen the dough is thawed and baked. Usually the dough is proofed after thawing and before baking. Usually shaping takes place before freezing.

The method according to the invention for preparing a dough (a frozen dough or a dough which is to be stored frozen) results in an improved property of the dough and/or in an improved property of the baked product made from the dough.

Herein the phrase "baked product made from the dough" means a baked product made from a dough that was thawed after it was frozen. The frozen dough according to the invention comprises a *Penicillium* glucose oxidase and a *Talaromyces* xylanase, both as defined in the claims.

The frozen dough according to the invention has at least one improved property as described herein or results in at least one improved property in a baked product made from such dough.

The use according to the invention of the *Penicillium* glucose oxidase and the *Talaromyces* xylanase, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3, in the preparation of a frozen dough result in at least one improved property as described herein.

The improved property is a property which is relevant in the preparation of a baked product. The improved property is demonstrated as compared to a reference which has been subjected to the same conditions.

The improved property may be determined after thawing the frozen dough according to the invention, i.e. after thawing a frozen dough comprising a *Penicillium* glucose oxidase and a *Talaromyces* xylanase, both as defined in the claims, and comparing it a reference dough which has been subjected to the same conditions.

The improved property may be determined after thawing a frozen dough obtained by any method according to the invention and comparing it to a reference dough which has been subjected to the same conditions. In an aspect the improved property of the frozen dough is determined after thawing the frozen dough.

The improved property may be determined by comparison of a dough and/or a baked product prepared with and without addition of the *Penicillium* glucose oxidase and the *Talaromyces* xylanase in accordance with the methods described herein.

The improved property is determined as compared with a reference not comprising the *Penicillium* glucose oxidase and the *Talaromyces* xylanase, both as defined in the claims. The reference may be a dough prepared without a glucose oxidase or may be a dough comprising a different glucose oxidase such as an *Aspergillus* glucose oxidase. The reference may be a dough without a xylanase or may be a dough comprising a different xylanase such as an *Aspergillus* xylanase. The reference may be a baked product prepared from a dough which has been stored frozen not comprising the *Penicillium* glucose oxidase and the *Talaromyces* xylanase.

In all cases "the reference" dough has been stored frozen for the same amount of time as the dough according to the invention.

In all cases "the reference" baked product is a baked product made from a reference frozen dough which has been stored frozen for the same amount of time as the frozen dough according to the invention.

The improved property may be demonstrated by preparing a baked product from a dough which has been stored frozen comprising the *Penicillium* glucose oxidase and the *Talaromyces* xylanase, both as defined in the claims, and preparing another baked product from a dough which has been stored frozen not comprising the *Penicillium* glucose oxidase and the *Talaromyces* xylanase, determining the property of both products and comparing the results.

The improved property may include any one or more of the following, but is not limited to increased elasticity of the dough, increased dough stability, reduced stickiness of the dough, improved extensibility of the dough, increased volume of the baked product, improved flavour of the baked product, improved crumb structure of the baked product, reduced firmness of the baked product, increased split and/or reduced blistering of the baked product.

The baked product prepared from a frozen dough in which the *Penicillium* glucose oxidase and the *Talaromyces* xylanase, both as defined in the claims, were included during preparation of the dough, has increased volume when compared to a baked product prepared from a frozen dough which does not comprise the *Penicillium* glucose oxidase and the *Talaromyces* xylanase, in particular compared to a baked product prepared from a frozen dough which comprises an *Aspergillus* glucose oxidase and a *Aspergillus* xylanase.

In an aspect a baked product prepared from a frozen dough in which the *Penicillium* glucose oxidase and the *Talaromyces* xylanase, both as defined in the claims, were included during preparation of the dough, has increased split when compared to a baked product prepared from a frozen dough which does not comprise the *Penicillium* glucose oxidase and the *Talaromyces* xylanase, in particular compared to a baked product prepared from a frozen dough which comprises an *Aspergillus* glucose oxidase and an *Aspergillus* xylanase.

In an aspect a dough comprising the *Penicillium* glucose oxidase and the *Talaromyces* xylanase, both as defined in the claims, shows increased dough stability compared to a dough which does not comprise the *Penicillium* glucose oxidase and the *Talaromyces* xylanase, in particular compared to a dough which comprises an *Aspergillus* glucose oxidase and an *Aspergillus* xylanase.

The term "increased elasticity of the dough" is defined herein as the property of a dough which has a higher tendency to regain its original shape after being subjected to a certain physical strain.

The term "reduced stickiness of the dough" is defined herein as the property of a dough that has less tendency to adhere to surfaces, e.g., in the dough production machinery, and is either evaluated empirically by the skilled test baker or measured by the use of a texture analyser (e.g., TAXT2) as known in the art.

The term "improved extensibility of the dough" is defined herein as the property of a dough that can be subjected to increased strain or stretching without rupture.

"Flavour" is evaluated by a trained test panel.

"Firmness" refers to the crumb of the baked product and may be evaluated either empirically by the skilled test baker or measured by the use of a texture analyzer (e.g., TAXT2) as known in the art.

The term "improved crumb structure of the baked product" is defined herein as the property of a baked product with finer cells and/or thinner cell walls in the crumb and/or more uniform/homogenous distribution of cells in the crumb and is usually evaluated visually by the baker or by digital image analysis as known in the art (eg. C-cell, Calibre Control International Ltd, Appleton, Warrington, UK).

The term "reduced blistering of the baked product" is defined herein as a visually determined reduction of blistering on the crust of the baked bread. A blister is a pouch of air on the surface of bread crust.

In the context of the present invention, the term 'dough' is defined as a mixture of flour and other dough ingredients. In one embodiment, the dough is firm enough to knead or roll.

Dough is usually made from basic dough ingredients including (cereal) flour, such as wheat flour or rice flour, water and optionally salt. Cereals herein include maize, rice, wheat, barley, sorghum, millet, oats, rye, triticale, buckwheat, quinoa, spelt, einkorn, emmer, durum and kamut.

For leavened products, primarily baker's yeast is used next to chemical leavening systems such as a combination of an acid or acid generating compound and bicarbonate. The dough may be made using a mix, including a bread mix.

Frozen doughs have several advantages compared to fresh doughs, e.g. frozen doughs facilitate dough distribution to smaller bakeries. It also facilitates production planning and allows bakeries to produce bread on demand. Time of baking, sale and consumption of the baked product may be weeks or even months later than the production of the dough. In one aspect, the dough for the preparation of a frozen dough is unproofed (also called unfermented) and frozen immediately after forming, moulding or shaping the dough. In another aspect, the dough for the preparation of a frozen dough is proofed and frozen. In one aspect, the dough comprising a *Penicillium* glucose oxidase and a *Talaromyces* xylanase is quickly frozen in a blast freezer at approximately -35 degrees Celsius for 45 minutes. After which the inner temperature of the dough has reached a temperature of -7 degrees Celsius or lower, the dough pieces are put in plastic bags and stored in a storage freezer. In one aspect, the dough pieces are put in plastic bags and stored in a storage freezer, once the inner temperature of the dough pieces had reached a temperature in the range of -10 degrees Celsius to -15 degrees Celsius.

In an aspect the frozen dough prepared according to the method of the invention has good dough handling properties after thawing the frozen dough. Dough handling properties include properties which are important for conveniently making portions of dough, conditioning the dough and transporting the dough to dough forming equipment. In an aspect the frozen dough prepared according to the method of the invention demonstrates after thawing reduced dough stickiness to machines used in the bread making process compared to a reference dough.

The method of the invention may result in an increased dough stability as compared to a reference dough. Dough stability herein is stability of the dough after it has been stored frozen and thawed thereafter. "Increased dough stability" may also be referred to as "increased stability of a dough".

In the context of the present invention, the term "increased dough stability" means that the dough is less susceptible to forming faults as a consequence of frozen storage process. A forming fault may be an undesired change in shape of the dough or a crack in the surface of the dough.

Increased dough stability may be observed by the thawed, fermented and shaped dough maintaining better its shape during the time from before entering the oven until after baking when compared to a reference dough. If the shape of the dough in the period before entering the oven remains more similar as compared to the reference dough the dough stability has improved. This may for example be determined by comparing the diameter to height ratio of the dough at "the beginning of the period before entering the oven" with the diameter to height ratio of the dough at "the end of the period before entering the oven". If these ratios are more similar as compared to the reference dough the dough stability has improved.

"The period before entering the oven" herein means the period from half an hour until and including 1 minute before entering the oven. In an aspect from 15 minutes until 1 minute before entering the oven.

The period before entering the oven typically includes transport of the dough to the oven.

In another aspect, (advanced) image analysis techniques may be used to measure and compare the shape and /or volume of the dough in the period before entering the oven and compare it to the reference dough.

Increased dough stability may be observed by for example the dough being better able to, after frozen storage and thawing, maintain its shape while it is transported to the oven. If the shape difference of the dough before and after transport is smaller when compared to the shape difference reference dough before and after transport the dough stability has improved.

Dough stability may alternatively be evaluated by comparing the shape of the thawed dough before it enters the oven and the shape of the baked product obtained after baking. Dough stability is improved if these shapes are more similar, i.e differ less from each other, than the corresponding shape differences of the reference treated under identical conditions. This can for example be determined by comparing the diameter to height ratio of the dough and the diameter to height ratio of the baked product made from the dough. If these ratios are more similar as compared to the reference dough and baked product the dough stability has improved

The dough stability may be evaluated by touching the surface of the dough and watching how the dough responds to this touch. For example by gently pressing one or more fingers in the dough and watching how the dent thus obtained disappears. The faster the dent disappears the higher the dough stability. The further the dent disappears, i.e. the further the dough surface gets back to the shape it had before touching the higher the dough stability. If the dent disappears to a further extent and/or quicker as compared to the reference dough, the dough stability has improved.

The volume of the baked product is preferably measured as the volume of a given loaf of baked product determined by an automated volume analyser (eg. BVM-3, TexVol Instruments AB, Viken, Sweden or a Volscan Profiler 600, Texture technologies, Hamilton, US). Such anaylyser will typically provide data of the volume of a baked product using ultrasound or laser detection as known in the art. In case the volume of the baked product is larger as compared to the reference baked product, the volume is improved. Alternatively the height of the baked product after baking in a tin may be used as an indication of the baked product volume. In case the height of the baked product is increased, the volume of the baked product is larger and the volume is improved.

If the volume of the baked product is larger as compared to the reference, the volume has improved.

The split is how much the baked product, such as a baguette, burst open during the baking process. In some types of bread a split is a desired property and is induced in a defined manner by slashing the dough before it is baked. Slashing is a term that refers to the process of cutting through the dough skin with a sharp knife. Baguettes are typically made with 3 or 5 diagonal slashes.

The split, also referred to as crust opening, of the baked product may be determined by measuring the crust opening at the largest width of the crust opening after baking the dough and cooling the baked product to ambient temperature. A lager width indicates an increased split. The split may also be evaluated by visual inspection for example by an experienced baker judging or ranking the split. A larger split is usually considered an improved split.

For some baked products a split having a more rough, jaggered or hairy edge is desirable and considered an improved split.

In an aspect of the method not according to the invention and present for illustration purpose only the *Penicillium* glucose oxidase comprises an amino acid sequence having at least 75% identity to amino acids 19 to 604 of SEQ ID NO: 1.

In an aspect of the method according to the invention the *Penicillium* glucose oxidase comprises an amino acid sequence having at least 90%, at least 95%, at least 97%, at least 98% or at least 99% identity to amino acids 19-604 of SEQ ID NO: 1.

In an aspect of the method according to the invention the *Penicillium* glucose oxidase has an amino acid sequence having at least 90%, at least 95%, at least 97%, at least 98% or at least 99% identity to amino acids 19-604 of SEQ ID NO: 1.

In an aspect of the method according to the invention the *Penicillium* glucose oxidase comprises an amino acid sequence as set out in to amino acids 19-604 of SEQ ID NO: 1.

In an aspect of the method according to the invention the *Penicillium* glucose oxidase has an amino acid sequence as set out in to amino acids 19-604 of SEQ ID NO: 1.

In an aspect of the method according to the invention the *Penicillium* glucose oxidase, is a *Penicillium chrysogenum* glucose oxidase.

In an aspect of the method not according to the invention and present for illustration purpose only the *Talaromyces* xylanase comprises an amino acid sequence having at least 75% identity to amino acids 23 to 408 of SEQ ID NO: 3.

In an aspect of the method according to the invention the *Talaromyces* xylanase comprises an amino acid sequence having at least 90%, at least 95%, at least 97%, at least 98% or at least 99% identity to amino acids 23-408 of SEQ ID NO: 3.

In an aspect of the method according to the invention the *Talaromyces* xylanase has an amino acid sequence having at least 90%, at least 95%, at least 97%, at least 98% or at least 99% identity to amino acids 23-408 of SEQ ID NO: 3.

In an aspect of the method according to the invention the *Talaromyces* xylanase comprises an amino acid sequence as set out in amino acids 23-408 of SEQ ID NO: 3.

In an aspect of the method according to the invention the *Talaromyces* xylanase has an amino acid sequence as set out in amino acids 23-408 of SEQ ID NO: 3.

In an aspect of the method according to the invention the *Talaromyces* xylanase, is a *Talaromyces emersonii* xylanase.

The invention further relates to a composition comprising the *Penicillium* glucose oxidase and the *Talaromyces* xylanase both as defined in the claims.

The composition may be used in the methods of the invention. The composition may be used in a method for improving a dough by including a *Penicillium* glucose oxidase and a *Talaromyces* xylanase, both as defined in the claims, in the form of a composition in the dough during preparation of the dough.

The dough comprising the composition according to the invention, comprising *Penicillium* glucose oxidase and the *Talaromyces* xylanase, both as defined in the claims, shows increased dough stability after it has been stored frozen compared to a reference dough which does not comprise said composition, in particular compared to a reference dough which comprises an *Aspergillus* glucose oxidase and an *Aspergillus* xylanase.

The composition may be used in a method for improving baked products made from a dough which has been stored frozen, which method comprises including a *Penicillium* glucose oxidase and a *Talaromyces* xylanase, both as defined in the claims, as a composition in the dough during preparation of the dough.

The baked product prepared from a frozen dough in which the composition according to the invention, comprising *Penicillium* glucose oxidase and the *Talaromyces* xylanase, both as defined in the claims, was included during preparation of the dough, has increased volume when compared to a baked product prepared from a reference frozen dough which does not comprise said composition, in particular compared to a baked product prepared from a frozen dough which comprises an *Aspergillus* glucose oxidase and a *Aspergillus* xylanase.

The baked product prepared from a frozen dough in which the composition according to the invention, comprising *Penicillium* glucose oxidase and the *Talaromyces* xylanase, both as defined in the claims, was included during preparation of the dough, may have increased split when compared to a baked product prepared from a frozen dough which does not comprise said composition, in particular compared to a baked product prepared from a frozen dough which comprises an *Aspergillus* glucose oxidase and a *Aspergillus* xylanase.

In an aspect of the composition not according to the invention and present for illustration purpose only the *Penicillium* glucose oxidase comprises an amino acid sequence having at least 75% identity to amino acids 19 to 604 of SEQ ID NO: 1.

In an aspect of the composition according to the invention the *Penicillium* glucose oxidase comprises an amino acid sequence having at least 90%, at least 95%, at least 97%, at least 98% or at least 99% identity to amino acids 19-604 of SEQ ID NO: 1.

In an aspect of the composition according to the invention the *Penicillium* glucose oxidase, is a *Penicillium chrysogenum* glucose oxidase.

In an aspect of the composition according to the invention the *Penicillium* glucose oxidase comprises an amino acid sequence as set out in amino acids 19-604 of SEQ ID NO: 1.

In an aspect of the composition according to the invention the *Penicillium* glucose oxidase has an amino acid sequence as set out in amino acids 19-604 of SEQ ID NO: 1.

In an aspect of the composition not according to the invention and present for illustration purpose only the *Talaromyces* xylanase comprises an amino acid sequence having at least 75% identity to amino acids 23 to 408 of SEQ ID NO: 3.

In an aspect of the composition according to the invention the *Talaromyces* xylanase comprises an amino acid sequence having at least 90%, at least 95%, at least 97%, at least 98% or at least 99% identity to amino acids 23-408 of SEQ ID NO: 3.

In an aspect of the composition according to the invention the *Talaromyces* xylanase, is a *Talaromyces emersonii* xylanase.

In an aspect of the composition according to the invention the *Talaromyces* xylanase comprises an amino acid sequence as set out in amino acids 23-408 of SEQ ID NO: 3.

In an aspect of the composition according to the invention the *Talaromyces* xylanase has an amino acid sequence as set out in amino acids 23-408 of SEQ ID NO: 3.

In an embodiment of the composition according to the invention the composition further comprises at least one dough ingredient.

Dough is made using dough ingredients.
A dough ingredient herein includes without limitation (cereal) flour, a lecithin source including egg, water, salt, sugar, flavours, a fat source including butter, margarine, oil and shortening, baker's yeast, chemical leavening systems such as a combination of an acid (generating compound) and bicarbonate, a protein source including milk, soy flour, non-chemical oxidants (including ascorbic acid, bromate and azodicarbonamide (ADA), reducing agents (including L-cysteine), emulsifiers (including mono/di glycerides, monoglycerides such as glycerol monostearate (GMS), sodium stearoyl lactylate (SSL), calcium stearoyl lactylate (CSL), polyglycerol esters of fatty acids (PGE) and diacetyl tartaric acid esters of mono- and diglycerides (DATEM), gums (including guar gum and xanthan gum), flavours, acids (including citric acid, propionic acid), starch, modified starch, gluten, humectants (including glycerol), preservatives and one or more additional enzymes.

The one or more additional enzyme may be selected from enzymes like a protease, such as an endoprotease or an exoprotease; a peptidase, such as an exopeptidase or an endopeptidase; a lipolytic enzyme, such as a triacyl glycerol lipase, a phospholipase, a galactolipase or an enzyme having both phospholipase and galactolipase activity; or a carbohydrase, such as a cellulase, a hemicellulase, in particular a pentosanase such as a xylanase; a cross-linking enzyme, such as a transglutaminase; a maltogenic alpha amylase; an alpha amylase or a beta amylase; an amyloglucosidase, an oxidase, such as a sulfhydryl oxidase, a pyranose oxidase; a peroxidase, a hexose oxidase, a laccase; a protein disulfide isomerase; an asparaginase.

In an aspect of the composition according to the invention the at least one dough ingredient includes ascorbic acid and/or an additional enzyme as described herein.

In an aspect of the composition according to the invention the at least one dough ingredient includes flour acid and/or an additional enzyme as described herein.

In an embodiment of the composition according to the invention the at least one dough ingredient includes flour and/or ascorbic acid.

In an aspect of the composition according to the invention the at least one dough ingredient includes ascorbic acid.

In an aspect of the composition according to the invention the at least one dough ingredient includes flour.

In an aspect of the composition according to the invention the dough ingredient includes flour and
a) 1 to 100 ppm of the *Penicillium* glucose oxidase as described in the claims by weight of flour; and
b) 1 to 60 ppm of the *Talaromyces* xylanase as described in the claims by weight of flour.

An aspect not according to the invention and present for illustration purpose only further relates to a dough.

In an embodiment of the dough according to the invention the dough comprises the *Penicillium* glucose oxidase and the *Talaromyces* xylanase as described herein. Such dough may have the benefit of an improved dough stability after the dough has been stored frozen.

The dough is prepared from the composition as described herein.

An aspect not according to the invention and present for illustration purpose only relates to a frozen dough prepared by a method according to the invention.

An aspect not according to the invention and present for illustration purpose only relates to a frozen dough comprising the *Penicillium* glucose oxidase and the *Talaromyces* xylanase as defined herein.

An aspect not according to the invention and present for illustration purpose only further relates to a baked product prepared from a frozen dough.

The baked product prepared from a frozen dough in which the *Penicillium* glucose oxidase and the *Talaromyces* xylanase were included during preparation of the dough, has increased volume when compared to a baked product prepared from a frozen dough which was prepared without the *Penicillium* glucose oxidase and the *Talaromyces* xylanase, in particular compared to a baked product prepared from a frozen dough which comprises an *Aspergillus* glucose oxidase and a *Aspergillus* xylanase.

The baked product prepared from a frozen dough in which the *Penicillium* glucose oxidase and the *Talaromyces* xylanase were included during preparation of the dough, may have increased split when compared to a baked product prepared from a frozen dough which was prepared without the *Penicillium* glucose oxidase and the *Talaromyces* xylanase, in particular compared to a baked product prepared from a frozen dough which comprises an *Aspergillus* glucose oxidase and a *Aspergillus* xylanase.

Examples of baked products, whether of a white, brown or whole-meal type, which may be advantageously produced by the present invention include bread (in particular white, whole-meal or rye bread), typically in the form of loaves or rolls, French baguette-type bread including baguette and batard, pastries, croissants, brioche, panettone, pasta, noodles (boiled or (stir-)fried), pita bread and other flat breads, tortillas, tacos, cakes, pancakes, cookies in particular biscuits, doughnuts, including yeasted doughnuts, bagels, pie crusts, steamed bread, crisp bread, brownies, sheet cakes, snack foods (e.g., pretzels, tortilla chips, fabricated snacks, fabricated potato crisps). The term baked product includes, bread containing from 2 to 30 wt% sugar, fruit containing bread, breakfast cereals, cereal bars, eggless cake, soft rolls and gluten-free bread. Gluten free bread herein and herein after is bread than contains at most 20 ppm gluten. Several grains and starch sources are considered acceptable for a gluten-free diet. Frequently used sources are potatoes, rice and tapioca (derived from cassava). Baked product includes without limitation tin bread, loaves of bread, twists, buns, such as hamburger buns or steamed buns, chapati, rusk, dried steam bun slice , bread crumb, matzos, focaccia, melba toast, zwieback, croutons, soft pretzels, soft and hard bread, bread sticks, yeast leavened and chemically-leavened bread, laminated dough products such as Danish pastry, croissants or puff pastry products, muffins, Danish bagels, confectionery coatings, crackers, wafers, pizza crusts, tortillas, pasta products, crepes, waffles and par-baked products. An example of a par-baked product includes, without limitation, partially baked bread that is completed at point of sale or consumption with a short second baking process.

The bread may be white or brown pan bread and may for example be manufactured using a so called American style Sponge and Dough method or an American style Direct method.

In an aspect the bread is a floor bread, i.e. a bread which is baked on an oven plate.

The term tortilla herein includes corn tortilla and wheat tortilla. A corn tortilla is a type of thin, flat bread, usually unleavened made from finely ground maize (usually called "corn" in the United States). A flour tortilla is a type of thin, flat bread, usually unleavened, made from finely ground wheat flour. The term tortilla further includes a similar bread from South America called arepa, though arepas are typically much thicker than tortillas. The term tortilla further includes a laobing, a pizza-shaped thick "pancake" from China and an Indian Roti, which is made essentially from wheat flour. A tortilla usually has a round or oval shape and may vary in diameter from about 6 to over 30 cm.

In an aspect the baked product is a crusty bread having a crispy crust and a soft core. Examples of crusty bread include, but are not limited to, baguette, flûte, pistolet, ciabatta, batard, Kaiser roll, hard roll, panini and maraguetta.

The invention further relates to a method for preparing a baked product comprising the steps of
a. preparing a dough including the step of adding the *Penicillium* glucose oxidase and the *Talaromyces* xylanase, both as defined in the claims, to at least one dough ingredient; and
b. cooling the dough to a temperature in the range of -40 to -5 degrees Celsius to obtain a frozen dough; and
c. thawing the frozen dough to obtain a thawed dough; and
d. baking the thawed dough.

In an embodiment of a method according to the invention the method is a method for preparing a baked product comprising the steps of
a. preparing a dough including the step of adding the *Penicillium* glucose oxidase and the *Talaromyces* xylanase, both as defined in the claims, to at least one dough ingredient; and
b. cooling the dough at a temperature in the range of -40 to -30 degrees Celsius, for at least 20 minutes; and
c. thawing the frozen dough to obtain a thawed dough; and
d. baking the thawed dough.

In an aspect of step b) the dough is cooled at a temperature in the range of -40 to -30 degrees Celsius, for a period of time from 20 to 180 minutes, in an aspect for a period of time from 30 to 120 minutes, for a period of time from 40 to 100 minutes for a period of time from 45 to 90 minutes.

In an embodiment the method of the invention is a method for preparing a baked product comprising the steps of
a. thawing a frozen dough comprising the *Penicillium* glucose oxidase and the *Talaromyces* xylanase, both as defined in the claims, and
b. baking the thawed dough.

In an embodiment the method of the invention is a method for preparing a baked product comprising the steps of
a. thawing a dough which has been stored frozen comprising a *Penicillium* glucose oxidase and a *Talaromyces* xylanase xylanase, both as defined in the claims, and
b. baking the thawed dough.

The present invention relates to the use of the *Penicillium* glucose oxidase and the *Talaromyces* xylanase, both as defined in the claims, in the preparation of a frozen dough. The use according to the invention of the *Penicillium* glucose oxidase and the *Talaromyces* xylanase as defined herein may be by the *Penicillium* glucose oxidase and the *Talaromyces* xylanase, both as defined in the claims, as part of a composition. Such use may be in the form of a composition as described herein.

In an aspect of the use according to the invention, the dough has been stored frozen for at least 1 week, in an aspect at least 2 weeks, in an aspect at least 1 month, in an aspect at least two months. In an aspect the dough has been stored at a temperature in the range of -40 to -5 degrees Celsius, preferably to a temperature in the range of -35 to -15 degrees Celsius for 3 months or more. In an aspect the dough has been stored at a temperature in the range of -40 to -5 degrees Celsius, preferably to a temperature in the range of -35 to -15 degrees Celsius for 4 months or more, in an aspect 6 months or more, in an aspect 9 months or more. In an aspect the dough has been stored at a temperature in the range of -40 to -5 degrees Celsius, preferably to a temperature in the range of -35 to -15 degrees Celsius for 12 months or more.

In an embodiment the present invention relates to the use of the *Penicillium* glucose oxidase and the *Talaromyces* xylanase, both as defined in the claims, for improving at least one property of a dough which has been stored frozen or of a baked product prepared from a dough which has been stored frozen.

In an embodiment the present invention relates to the use of the *Penicillium* glucose oxidase and the *Talaromyces* xylanase, both as defined in the claims, for improving the volume and/or the split of a baked product prepared from a dough which has been stored frozen.

In an aspect of the use according to the invention, said use is a use of the *Penicillium* glucose oxidase and the *Talaromyces* xylanase, both as defined in the claims, to provide a baked product prepared from a frozen dough having an improved volume as compared a reference baked product prepared from a frozen dough.

In an aspect of the use according to the invention, said use is a use of the *Penicillium* glucose oxidase and the *Talaromyces* xylanase, both as defined in the claims, to provide a baked product prepared from a frozen dough having an improved crust opening as compared a reference baked product prepared from a frozen dough.

In an embodiment the present invention relates to the use of the *Penicillium* glucose oxidase and the *Talaromyces* xylanase, both as defined in the claims, for improving the dough stability of a dough which has been stored frozen.

The *Penicillium* glucose oxidase and the *Talaromyces* xylanase as described herein may be obtained by any suitable means. In one embodiment, it is isolated from a source, in particular a prokaryotic or eukaryotic microorganism, containing the enzyme. Suitable examples of microorganisms are mammalian, plant, fungal, bacterial and algal microorganisms as mentioned below.

In one aspect not according to the invention and present for illustration purpose only, the *Penicillium* glucose is isolated from a *Penicillium* species, in particular from *Penicillium chrysogenum.* A suitable example of such a *Penicillium* glucose oxidase is a *Penicillium* glucose oxidase comprising an amino acid sequence according to amino acids 19-604 of SEQ ID NO: 1 or a glucose oxidase with an amino acid sequence which shows at least 75% identity to amino acids 19-604 of SEQ ID NO: 1. In one embodiment, the glucose oxidase has an amino acid sequence which shows at least 90%, at least 95%, at least 97%, at least 98% or at least 99% identity to amino acids 19-604 of SEQ ID NO: 1.

In another aspect not according to the invention and present for illustration purpose only, the *Penicillium* glucose oxidase is generated using standard molecular biology techniques to provide a glucose oxidase which would otherwise be obtainable from a *Penicillium* fungus, e.g. by *de novo* synthesis of a nucleotide sequence according to SEQ ID NO: 2 or a nucleotide sequence which encodes a protein having an amino acid sequence having at least 75%, at least 80%, at least 85%, at least 90%, at least 95%, at least 97%, at least 98% or at least 99% identity to amino acids 19-604 of SEQ ID NO: 1. In one aspect, a nucleotide sequence according to SEQ ID NO: 2 is used. WO2010121933 describes cloning and expression of *Penicillium* glucose oxidase. Such a nucleotide sequence may then be used for transformation of a host microorganism. In another embodiment, the *Penicillium* glucose oxidase is generated using site-saturation mutagenesis, scanning mutagenesis, insertional mutagenesis, random mutagenesis, site-directed mutagenesis, and directed-evolution of an existing glucose oxidase, e.g. of the one depicted in amino acids 19 to 604 of SEQ ID NO: 1, as well as various other recombination approaches known to a skilled person in the art. Glucose oxidases (EC 1.1.3.4) catalyse the oxidation of glucose into gluconic acid and hydrogen peroxide using atmospheric oxygen.

The *Talaromyces* xylanase may be obtained as described in WO2002/24926.

In the context of the present invention, in order to determine the percentage of sequence identity of two amino acid sequences or of two nucleic acid sequences, the sequences are aligned for optimal comparison purposes. In order to optimize the alignment between the two sequences, gaps may be introduced in any of the two sequences that are compared. Such alignment may be carried out over the full length of the sequences being compared. Alternatively, the alignment may be carried out over a shorter length, for example over about 20, about 50, about 100 or more nucleic acids/bases or amino acids. The sequence identity is the percentage of identical matches between the two sequences over the reported aligned region. Upon the alignment of two sequences, the resulting aligned amino acid positions are usually referred to as corresponding positions. The percent sequence identity between two amino acid sequences or between two nucleotide sequences may be determined using the Needleman and Wunsch algorithm for the alignment of two sequences. (Needleman, S. B. and Wunsch, C. D. (1970) J. Mol. Biol. 48, 443-453). Both amino acid sequences and nucleotide sequences can be aligned by the algorithm. The Needleman-Wunsch algorithm has been implemented in the computer program NEEDLE. For the purpose of this invention the NEEDLE program from the EMBOSS package was used (version 2.8.0 or higher, EMBOSS: The European Molecular Biology Open Software Suite (2000) Rice,P. Longden,I. and Bleasby,A. Trends in Genetics 16, (6) p. 276-277, http://emboss.bioinformatics.nl/). For protein sequences EBLOSUM62 is used for the substitution matrix. For nucleotide sequences, EDNAFULL is used. The optional parameters used are a gap-open penalty of 10 and a gap extension penalty of 0.5. The skilled person will appreciate that all these different parameters will yield slightly different results but that the overall percentage identity of two sequences is not significantly altered when using different algorithms.

After alignment by the program NEEDLE as described above the percentage of sequence identity between a query sequence and a sequence of the invention is calculated as follows: Number of corresponding positions in the alignment showing an identical amino acid or identical nucleotide in both sequences divided by the total length of the alignment after subtraction of the total number of gaps in the alignment. The identity as defined herein can be obtained from NEEDLE by using the NOBRIEF option and is labeled in the output of the program as "longest-identity".

The nucleic acid and protein sequences of the present invention can further be used as a "query sequence" to perform a search against public databases to, for example, identify other family members or related sequences. Such searches can be performed using the NBLAST and XBLAST programs (version 2.0) of Altschul, et al. (1990) J. Mol. Biol. 215:403-10. BLAST nucleotide searches can be performed with the NBLAST program, score = 100, word length = 12 to obtain nucleotide sequences similar to nucleic acid molecules of the invention. BLAST protein searches can be performed with the XBLAST program, score = 50, word length = 3 to obtain amino acid sequences similar to protein molecules of the invention. To obtain gapped alignments for comparison purposes, Gapped BLAST can be utilized as described in Altschul et al., (1997) Nucleic Acids Res. 25(17): 3389-3402. When utilizing BLAST and Gapped BLAST programs, the default parameters of the respective programs (e.g., XBLAST and NBLAST) can be used. See the homepage of the National Center for Biotechnology Information at http://www.ncbi.nlm.nih.gov/.

Any microorganism may be used as a recombinant host cell to produce a *Penicillium* glucose oxidase or *Talaromyces* xylanase for use according to the invention. In one embodiment, the microorganism is a prokaryotic cell, such as a Gram-negative or Gram-positive bacterium. Suitable bacteria include *Escherichia, Anabaena, Caulobactert, Cyanobacteria, Gluconobacter, Rhodobacter, Pseudomonas, Paracoccus, Bacillus, Brevibacterium, Corynebacterium, Rhizobium (Sinorhizobium), Flavobacterium, Klebsiella, Enterobacter, Lactobacillus, Lactococcus, Methylobacterium, Moraxella, Neisseria, Staphylococcus, Streptomyces* or *Thermoactinomyces.* In another embodiment, the microorganism is a eukaryotic cell, such as a mammalian cell, insect cell, plant cell, fungal cell or algal cell. Suitable examples of mammalian cells are CHO cells, COS cells, 293 cells, Per.C6® cells, and hybridomas. Suitable examples of insect cells include Sf9 and Sf21 cells and derivatives thereof. Suitable examples of fungal cells include yeast cells, such as *Candida, Hansenula, Kluyveromyces, Pichia, Saccharomyces, Schizosaccharomyces,* or *Yarrowia* strain; more preferably *Kluyveromyces lactis, S. cerevisiae, Hansenula polymorpha, Yarrowia lipolytica* and *Pichia pastoris,* or a filamentous fungi. Filamentous fungi include all filamentous forms of the subdivision Eumycota and Oomycota (as defined by Hawksworth et al., In, Ainsworth and Bisby's Dictionary of The Fungi, 8th edition, 1995, CAB International, University Press, Cambridge, UK). Filamentous fungal strains include strains of *Acremonium, Agaricus, Aspergillus, Aureobasidium, Chrysosporium, Coprinus, Cryptococcus, Filibasidium, Fusarium, Humicola, Magnaporthe, Mucor, Myceliophthora, Neocallimastix, Neurospora, Paecilomyces, Penicillium, Piromyces, Panerochaete, Pleurotus, Rasamsonia, Schizophyllum, Talaromyces, Thermoascus, Thielavia, Tolypocladium,* and *Trichoderma.* Preferred filamentous fungal cells belong to a species of an *Aspergillus, Chrysosporium, Myceliophthora, Penicillium, Talaromyces, Fusarium, Rasamsonia, Thermoascus* or *Trichoderma* genus, and most preferably a species of *Aspergillus niger, Aspergillus awamori, Aspergillus foetidus, Aspergillus sojae, Aspergillus fumigatus, Aspergillus oryzae, Fusarium oxysporum, Myceliophthora thermophila, Rasamsonia emersonii, Trichoderma reesei, Talaromyces emersonii, Thermoascus aurantiacus* or *Penicillium chrysogenum.* Algae is the group of unicellular and multicellular eukaryortic photosynthetic organisms, including microalgae, such as Dunaliella, Spirulina and Chlorella. In one embodiment, the recombinant host cell comprising a nucleotide sequence or a nucleic acid molecule according to the invention is an *Aspergillus, Bacillus, Chrysosporium, Escherichia, Kluyveromyces, Myceliophthora, Penicillium, Pseudomonas, Rasamsonia, Saccharomyces, Streptomyces* or *Talaromyces* species, preferably a *Bacillus subtilis, Bacillus amyloliquefaciens, Bacillus licheniformis, Escherichia coli, Aspergillus niger, Aspergillus oryzae, Myceliophthora thermophila, Rasamsonia emersonii or Trichoderma reesei* species. The recombinant host cell is preferably capable of expressing or overexpressing the glucose oxidase or xylanase, for example as described in WO 2010/121933 or WO 2012/001169. The recombinant host cell may further comprise one or more modifications in its genome such that the recombinant microbial host cell is deficient in the production of at least one product selected from glucoamylase (glaA), acid stable alpha-amylase (amyA), neutral alpha-amylase (amyBI and amyBII), oxalic acid hydrolase (oahA), a toxin, preferably ochratoxin and/or fumonisin, a protease transcriptional regulator prtT, PepA, a product encoded by the gene hdfA and/or hdfB, a non-ribosomal peptide synthase *npsE,* agsE or *amyC* if compared to a parent host cell and measured under the same conditions. Suitable methods of producing said host cells include the ones described in WO2012/001169 and WO2014013074.

The glucose oxidase and/or the xylanase used in the present invention may be fusion proteins. Techniques for producing fusion polypeptides are known in the art, and include ligating the coding sequences encoding the polypeptides so that they are in frame. Expression of the fused polypeptide is under control of the same promoter(s) and terminator. The hybrid polypeptides may comprise a combination of partial or complete polypeptide sequences obtained from at least two different polypeptides wherein one or more may be heterologous to a host cell. Such fusion polypeptides from at least two different polypeptides may comprise a binding domain from one polypeptide, such as a starch binding domain or a carbohydrate binding domain, operably linked to a catalytic domain from a second polypeptide. Examples of fusion polypeptides and signal sequence fusions are for example as described in WO2010/121933, WO2013/007820 and WO2013/007821.

In the context of the present invention the term 'polypeptide' refers to a molecule which contains a backbone of a chain of at least ten amino acids, wherein the amino acids are covalently linked to each other by peptide bonds. These backbone amino acids groups may be linked to other groups, such as other amino acid sequences, sugar groups or lipid groups. The polypeptide may contain structural features, such as alpha-helices, beta-pleated sheets or disulphide bridges. A polypeptide used according to the present invention may comprise a catalytic domain and one or more binding domains, such as a starch or carbohydrate binding domain. In the context of the present invention, the amino acid sequence is also referred to as 'polypeptide sequence' or 'protein sequence'. The term 'polypeptide' includes proteins.

In the Figures and in other places of the description of the present invention where the one letter code for amino acids is used, A stands for Alanine, C for Cysteine, D or Aspartic acid, E for Glutamic acid, F for Phenylalanine, G for Glycine, H for Histidine, I for Isoleucine, K for Lysine, L for Leucine, M for Methionine, N for Asparagine, P for Proline, Q for Glutamine, R for Arginine, S for Serine, T for Threonine, V for Valine, W for Tryptophan, Y for Tyrosine Such one letter codes are commonly known in the art, see e.g. Sambrook, et al. (Molecular Cloning: A Laboratory Manual, 2nd ed. Cold Spring Harbor Laboratory, Cold Spring Harbor Laboratory Press, Cold Spring Harbor, NY, 1989).

Hereafter the invention is illustrated by the following non-limiting examples.

### EXAMPLES

### MATERIALS AND METHODS

### Activity expressed in GOU (glucose oxidase units)

Glucose oxidase activity is determined in an assay in which gluconic acid formed is titrated. Thereto, 1 ml of diluted glucose oxidase is added to 25 ml of preheated 30 g/l glucose monohydrate solution at 35 degrees C. Sample dilutions and substrate were prepared in 50 mM HAc buffer at pH 5.1, containing 50 mM NaCl. After 15 minutes incubation at 35 degrees C, the reaction is terminated by the addition of 10 ml 0.1 N NaOH, at the same time neutralizing the gluconic acid formed. Excess NaOH is titrated with 0.05 M HCI. The difference in HCI consumption between a sample and blank run is a measure for the amount of glucose oxidase activity. One glucose oxidase unit (GOU) is defined as the amount of enzyme needed to oxidize 3 mg of glucose to gluconic acid under conditions of the assay.

### Activity expressed in XU (xylanase units)

Xylanase activity is measured by the release of para-nitrophenol (pNP) from P-Nitrophenyl-beta-D-xylopyranoside (pNP-X, Sigma-Aldrich N2132), using a Konelab Arena 30 clinical analyzer. Enzyme samples are incubated with the substrate for 16 minutes and 40 seconds, after which the reaction is terminated (and color developed) by the addition of an alkaline stop solution.

The pNP-X substrate is prepared by dissolving 100 mg pNP-X in 50 ml sodium acetate buffer (30 mM) pH 4.5. Enzymatic samples are diluted to a range between 0.25 - 1.5 NTXU/ml in 30 mM sodium acetate buffer to which 0.2% Triton X-100 is added. 156 ul substrate is preheated in the analyzer for 5 minutes at 37°C, after which the reaction is started by the addition of 13 ul of suitably diluted sample. After the incubation, 80 ul of a 300 mM sodium carbonate solution is added, and the resulting absorbance increase as a result of enzymatic activity is measured at 405 nm. Activity is calculated from a pNP calibration (using a pNP solution of known concentration) performed on the same equipment, with the same reagents.

One XU is defined as the amount of enzyme that liberates 0.06 micromol p-nitrophenol per minute under the conditions of the assay (pH 4.5, 37°C)

### Baking performance

The dough stability was determined after thawing the frozen dough and proofing the dough to the full extent (as judged by an experienced baker). Dough stability was be evaluated by an experienced baker by touching the surface of the fully proofed dough and watching how the dough responds to this touch.

This was done by gently pressing one or more fingers in the dough and watching how the dent thus obtained disappeared. The faster and further the dough surface got back to the shape it had before touching, the higher the dough stability was judged.

The dough stability was evaluated on a scale of 1 to 10: with 1 as not stable and 10 as very stable. So a higher dough stability number indicates a higher dough stability. A higher dough stability than the reference is considered an improved dough stability. A dough stability of 6 is considered a sufficient dough stability.

Volume of the baked product was determined using a Volscan Profiler 600, Texture technologies, Hamilton, US. A larger volume than the reference is considered an improved volume.

Split of the baked product was determined by visual inspection by an experienced baker judging the split. The split was evaluated on a scale of 1 to 10: with 1 as closed and 10 as very open. So a higher split number indicates a larger split. A larger split than the reference is considered an improved split. A split of 6 is considered a sufficient split.

### Example 1 The effect of Penicillium glucose oxidase and Talaromyces xylanase on baguette prepared from frozen dough.

A bread dough was prepared by mixing and kneading the ingredients listed in Table 1 together with the enzymes listed in table 2 to 4.

**Table 1 Basic bread recipe**

| **Ingredient** | **Grams** | **% based on flour weight** | **Type** |
|---|---|---|---|
| Bread flour | 3000 | 100 | Epi-B, Paniflour, Belgium |
| yeast | 105 | 3.5 | Koningsgist, AB Mauri, the Netherlands |
| Salt | 54 | 1.8 | NaCl |
| Ascorbic acid | 150 ppm | | DSM / DNP Switserland |
| Fungal alpha amylase | 1 ppm | | BakeZyme® P500 BG, DSM, The Netherlands |
| Fungal amyloglucosidase | 100 ppm | | BakeZyme® AG1100 BG, DSM, The Netherlands |
| water | 1740 | 58 | |

Two glucose oxidases were used, a *Penicillium chrysogenum* glucose oxidase (Bakezyme® Go Pure from DSM, The Netherlands) and, not according to the invention, *Aspergillus niger* glucose oxidase (BakeZyme® GO10.000 BG, from DSM, The Netherlands).

Two xylanases were used, a *Talaromyces* xylanase (Bakezyme® FXP 1500 from DSM, The Netherlands) and, not according to the invention, *Aspergillus niger* xylanase (Bakezyme® HSP6000 from DSM, The Netherlands).

The ingredients were kneaded into a well-developed dough with an inner temperature of 20°C (+/- 0.5°C) using a Diosna SP-12, 1st speed: 400 revolutions or 17 Wh for 3 kg flour and thereafter 2nd speed: 112 Wh for 3 kg flour.

All recipes with combination of enzymes as specified in Tables 2-4 were kneaded under the same conditions.

Then, the dough was divided into dough pieces (20 pieces of 250 gram) and shaped. The shaped dough pieces were placed on a plate and placed in a Hein Shock freezer set at -35 degrees Celsius for 90 minutes. The dough pieces were put in a plastic bag (10 per bag) and stored in a freezer set at -18 degrees Celsius.

After one 1 week, 5 weeks and 15 weeks of frozen storage, the dough pieces were taken from the freezer, slowly thawed and warmed up to 20°C under humidity control (85% RH) at which they proofed until the desired volume. Dough stability of shaped dough pieces was evaluated as described above under Methods and Materials. After evaluating dough stability, the dough pieces were slashed (Cut 3 times diagonally through the dough skin), with a sharp knife.

Each dough piece was baked for 25 minutes at 240°C with injected steam immediately after proofing. The baguettes thus obtained were taken from the oven and allowed to cool on a rack at ambient temperature for at least 2 hours. Volume and split of the baked product was evaluated as described above under Methods and Materials.

The results are listed in tables 2-4 below.
ppm means mg/kg, e.g. 20 ppm means 20 mg of the indicated product per kg flour.
The following abbreviations are used in tables 2-4 :
**HSP:** Bakezyme® HSP 6000: *Aspergillus niger* xylanase, from DSM Food Specialties, the Netherlands.
**FXP:** *Bakezyme®* FXP 1500: *Talaromyces emersonii* xylanase, from DSM Food Specialties, the Netherlands **GOPure:** *Bakezyme®* Go Pure : *Penicillium chrysogenum* glucose oxidase, from DSM Food Specialties, the Netherlands.
**Bkz GO 10000** : BakeZyme® GO10.000 BG, *Aspergillus niger* glucose oxidase, from DSM Food Specialties, the Netherlands.
**GOPure:** *Bakezyme®* Go Pure : *Penicillium chrysogenum* glucose oxidase, from DSM Food Specialties, the Netherlands.

**Table 2 Volume of baguette prepared from frozen dough stored at -18 degrees Celsius for various time periods (1, 5, 15 weeks). The Volume measured for HSP6000 30 ppm is set at 100% for each of the different freezing periods.**

| | Volume | | |
|---|---|---|---|
| | 1 week | 5 weeks | 15 weeks |
| HSP6000 30 ppm | 100,0% | 100,0% | 100,0% |
| HSP6000 30 ppm + 20 ppm GOPure | 103,6% | 106,8% | 104,4% |
| HSP6000 30 ppm + 20 ppm Bkz GO 10000 | 106,5% | 106,6% | 105,9% |
| FXP 30 ppm | 96,9% | 94,9% | 84,9% |
| FXP 30 ppm + 20 ppm GOPure | 107,7% | 108,4% | 109,4% |
| FXP 30 ppm + 20 ppm Bkz GO 10000 | 99,9% | 99,0% | 93,7% |

| | | | |
|---|---|---|---|
| (1 week means 1 week of frozen storage after the production date of the dough, etc). | | | |

In table 2 it can be seen (Sample with both FXP and GOPure according to the invention, the other samples are comparative) that the volume of the baguette made from a dough which has been stored frozen i.e. the baguette made from a frozen dough comprising the *Penicillium* glucose oxidase and the *Talaromyces* xylanase (20 ppm GOPure + FXP 30 ppm resp.), is larger than the volume of the reference. The reference being the baguette made from a dough which has been made from a frozen dough not comprising the *Penicillium* glucose oxidase and the *Talaromyces* xylanase. The baked product made from a dough comprising the *Penicillium* glucose oxidase and the *Talaromyces* xylanase therefore has an improved volume as compared to the reference.

**Table 3 Crust opening / split of baguette prepared from frozen dough stored at -18 degrees Celsius for various time periods (1, 5, 15 weeks).**

| Crust opening/Split | | | |
|---|---|---|---|
| | 1 week | 5 weeks | 15 weeks |
| HSP6000 30 ppm | 6 | 6 | 5 |
| HSP6000 30 ppm + 20 ppm GOPure | 7,5 | 7 | 6 |
| HSP6000 30 ppm + 20 ppm Bkz GO 10000 | 7,5 | 7 | 6 |
| FXP 30 ppm | 6 | 6 | 5 |
| FXP 30 ppm + 20 ppm GOPure | 8,5 | 8 | 6,5 |
| FXP 30 ppm + 20 ppm Bkz GO 10000 | 7,5 | 7 | 6 |

| | | | |
|---|---|---|---|
| (1 week means 1 week of frozen storage after the production date of the dough, etc). | | | |

In table 3 it can be seen (Sample with both FXP and GOPure according to the invention, the other samples are comparative) that the split of the baguette made from a dough which has been stored frozen i.e. a baguette made from a frozen dough comprising the *Penicillium* glucose oxidase and the *Talaromyces* xylanase (20 ppm GOPure + FXP 30 ppm resp.), is larger than the split of the reference. The reference being the baguette made from a dough which has been made from a frozen dough not comprising the *Penicillium* glucose oxidase and the *Talaromyces* xylanase. The baked product made from a dough comprising the *Penicillium* glucose oxidase and the *Talaromyces* xylanase therefore has in improved split as compared to the reference.

**Table 4 Dough stability of dough that has been stored frozen at -18 degrees Celsius for various time periods (1, 5, 15 weeks).**

| Dough stability | | | |
|---|---|---|---|
| | 1 week | 5 weeks | 15 weeks |
| HSP6000 30 ppm | 6 | 6 | 5 |
| HSP6000 30 ppm + 20 ppm GOPure | 7,5 | 7 | 6 |
| HSP6000 30 ppm + 20 ppm Bkz GO 10000 | 7,5 | 6,5 | 6 |
| FXP 30 ppm | 6 | 6 | 5 |
| FXP 30 ppm + 20 ppm GOPure | 8 | 7,5 | 7 |
| FXP 30 ppm + 20 ppm Bkz GO 10000 | 7,5 | 7 | 6 |

| | | | |
|---|---|---|---|
| (1 week means 1 week of frozen storage after the production date of the dough, etc). | | | |

In table 4 it can be seen (Sample with both FXP and GOPure according to the invention, the other samples are comparative) that the dough stability of a dough which has been stored frozen, whereby the dough comprises the *Penicillium* glucose oxidase and the *Talaromyces* xylanase (20 ppm GOPure + FXP 30 ppm resp.), is larger than the dough stability of the reference. The reference being the dough not comprising the *Penicillium* glucose oxidase and the *Talaromyces* xylanase. The dough comprising the *Penicillium* glucose oxidase and the *Talaromyces* xylanase therefore has in improved dough stability as compared to the reference.

### Example 2 (Comparative)

### Penicillium glucose oxidase, Aspergillus niger glucose oxidase and blanco.

Bread dough was prepared by mixing and kneading the ingredients listed in Table 5 together with the enzymes listed in Tables 6 to 8. The same procedure was followed as described in Example 1.

**Table 5 Basic bread recipe**

| **Ingredient** | **Grams** | **% based on flour weight** | **Type** |
|---|---|---|---|
| Bread flour | 3000 | 100 | Epi-B, Paniflour, Belgium |
| yeast | 105 | 3.5 | Koningsgist, AB Mauri, the Netherlands |
| Salt | 54 | 1.8 | NaCl |
| Ascorbic acid | 150 ppm | | DSM / DNP Switserland |
| Fungal alpha amylase | 1 ppm | | BakeZyme® P500 BG, DSM, The Netherlands |
| Fungal amyloglucosidase | 100 ppm | | BakeZyme® AG1100 BG, DSM, The Netherlands |
| water | 1740 | 58 | |

All recipes as specified in Tables 6-8 below were kneaded under the same conditions. Dough stability of shaped dough pieces was evaluated as described above under Methods and Materials. Volume and split of the baked product was evaluated as described above under Methods and Materials. The results are listed in Tables 6-8. ppm means mg/kg, e.g. 20 ppm means 20 mg of the indicated product per kg flour.
The following abbreviations are used in Tables 6-8:
**Bkz GO 10000** : BakeZyme® GO10.000 BG, *Aspergillus niger* glucose oxidase, from DSM Food Specialties, the Netherlands.
**GOPure:** Bakezyme® Go Pure : *Penicillium chrysogenum* glucose oxidase, from DSM Food Specialties, the Netherlands.
**Blanco** means no HSP, FXP, Bkz GO 10000 and/or GOPure were added. (HSP: Bakezyme® HSP 6000; FXP: Bakezyme® FXP 1500 details see Example 1.)

**Table 6 Volume of baguette prepared from frozen dough stored at -18 degrees Celsius for various time periods (1, 5, 15 weeks). The Volume measured for HSP6000 30 ppm (as determined in Example 1) is set at 100% for each of the different freezing periods.**

| | Volume | | |
|---|---|---|---|
| | 1 week | 5 weeks | 15 weeks |
| Blanco | 82,1% | 81,1% | 82,4% |
| 20 ppm GoPure | 83,8% | 82,3% | 84,2% |
| 20 ppm Bkz GO 10000 | 88,1% | 86,6% | 87,6% |

| | | | |
|---|---|---|---|
| (1 week means 1 week of frozen storage after the production date of the dough, etc). | | | |

**Table 7 Crust opening / split of baguette prepared from frozen dough stored at -18 degrees Celsius for various time periods (1, 5, 15 weeks).**

| Crust opening/Split | | | |
|---|---|---|---|
| | 1 week | 5 weeks | 15 weeks |
| Blanco | 5 | 5 | 5 |
| 20 ppm GoPure | 6 | 6 | 6,5 |
| 20 ppm Bkz GO 10000 | 6 | 6,5 | 7 |

| | | | |
|---|---|---|---|
| (1 week means 1 week of frozen storage after the production date of the dough, etc). | | | |

**Table 8 Dough stability of dough that has been stored frozen at -18 degrees Celsius for various time periods (1, 5, 15 weeks).**

| Dough stability | | | |
|---|---|---|---|
| | 1 week | 5 weeks | 15 weeks |
| Blanco | 5 | 5 | 5 |
| 20 ppm GoPure | 7,5 | 7 | 7 |
| 20 ppm Bkz GO 10000 | 7 | 6,5 | 7 |

| | | | |
|---|---|---|---|
| (1 week means 1 week of frozen storage after the production date of the dough, etc). | | | |

## Claims

1. A method for preparing a dough, which method comprises:
a) preparing the dough including the step of adding a *Penicillium* glucose oxidase and a *Talaromyces* xylanase to at least one dough ingredient; and
b) cooling the dough to a temperature in the range of -40 to -5 degrees Celsius,
wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

2. A composition comprising a *Penicillium* glucose oxidase and a *Talaromyces* xylanase, wherein the *Penicillium* glucose oxidase comprises an amino acid sequence having at least 90% identity to amino acids 19 to 604 of SEQ ID NO: 1, and wherein the *Talaromyces* xylanase comprises an amino acid sequence having at least 90% identity to amino acids 23 to 408 of SEQ ID NO: 3.

3. The composition according to claim 2 wherein the composition further comprises at least one dough ingredient.

4. The composition according to claim 3, wherein the at least one dough ingredient includes flour and/or ascorbic acid.

5. A method for preparing a baked product comprising the steps of
a. preparing a dough including the step of adding a *Penicillium* glucose oxidase and a *Talaromyces* xylanase, both as defined in claim 1, to at least one dough ingredient; and
b. cooling the dough to a temperature in the range of -40 to -5 degrees Celsius to obtain a frozen dough; and
c. thawing the frozen dough to obtain a thawed dough; and
d. baking the thawed dough.

6. Use of a *Penicillium* glucose oxidase and a *Talaromyces* xylanase, both as defined in claim 1, for improving at least one property of a dough which has been stored frozen or of a baked product prepared from a dough which has been stored frozen.

7. The use according to claim 6 for improving the volume and/or the split of a baked product prepared from a dough which has been stored frozen.

8. The use according to claim 7 for improving the dough stability of a dough which has been stored frozen.

## Patentansprüche

1. Verfahren zur Herstellung eines Teigs, wobei das Verfahren Folgendes umfasst:
a) Herstellen des Teigs unter Einschluss des Schritts, bei dem eine Penicillium-Glucose-Oxidase und eine *Talaromyces-Xylanase* zu wenigstens einem Teigbestandteil gegeben werden; und
b) Kühlen des Teigs auf eine Temperatur im Bereich von -40 bis -5 Grad Celsius,
wobei die Penicillium-Glucose-Oxidase eine Aminosäuresequenz mit einer Identität von wenigstens 90% mit Aminosäuren 19 bis 604 von SEQ ID NO: 1 umfasst und wobei die *Talaromyces-Xylanase* eine Aminosäuresequenz mit einer Identität von wenigstens 90% mit Aminosäuren 23 bis 408 von SEQ ID NO: 3 umfasst.

2. Zusammensetzung, umfassend eine *Penicillium-*Glucose-Oxidase und eine *Talaromyces-Xylanase,* wobei die *Penicillium-*Glucose-Oxidase eine Aminosäuresequenz mit einer Identität von wenigstens 90% mit Aminosäuren 19 bis 604 von SEQ ID NO: 1 umfasst und wobei die *Talaromyces-Xylanase* eine Aminosäuresequenz mit einer Identität von wenigstens 90% mit Aminosäuren 23 bis 408 von SEQ ID NO: 3 umfasst.

3. Zusammensetzung nach Anspruch 2, wobei die Zusammensetzung ferner wenigstens einen Teigbestandteil umfasst.

4. Zusammensetzung nach Anspruch 3, wobei der wenigstens eine Teigbestandteil Mehl und/oder Ascorbinsäure enthält.

5. Verfahren zur Herstellung einer Backware, umfassend die Schritte
a. Herstellen eines Teigs unter Einschluss des Schritts, bei dem eine *Penicillium-Glucose-*Oxidase und eine *Talaromyces-Xylanase,* jeweils gemäß Anspruch 1, zu wenigstens einem Teigbestandteil gegeben werden; und
b. Kühlen des Teigs auf eine Temperatur im Bereich von -40 bis -5 Grad Celsius unter Erhalt eines gefrorenen Teigs; und
c. Auftauen des gefrorenen Teigs unter Erhalt eines getauten Teigs; und
d. Backen des getauten Teigs.

6. Verwendung einer Penicillium-Glucose-Oxidase und einer *Talaromyces-Xylanase,* jeweils gemäß Anspruch 1, zur Verbesserung wenigstens einer Eigenschaft eines Teigs, der eingefroren gelagert wurde, oder einer aus einem Teig, der eingefroren gelagert wurde, hergestellten Backware.

7. Verwendung nach Anspruch 6 zur Verbesserung des Volumens und/oder der Teilung einer aus einem Teig, der eingefroren gelagert wurde, hergestellten Backware.

8. Verwendung nach Anspruch 7 zur Verbesserung der Teigstabilität eines Teigs, der eingefroren gelagert wurde.

## Revendications

1. Méthode de préparation d'une pâte, laquelle méthode comprend :
a) la préparation de la pâte, comportant l'étape consistant à ajouter une glucose oxydase de *Penicillium* et une xylanase de *Talaromyces* à au moins un ingrédient de la pâte ; et
b) refroidir la pâte jusqu'à une température dans la plage allant de -40 à -5° Celsius ;
dans laquelle la glucose oxydase de *Penicillium* comprend une séquence d'acides aminés ayant au moins 90% d'identité avec les acides aminés 19 à 604 de SEQ ID n° 1, et où la xylanase de *Talaromyces* comprend une séquence d'acides aminés ayant au moins 90% d'identité avec les acides aminés 23 à 408 de SEQ ID n° 3.

2. Composition comprenant une glucose oxydase de *Penicillium* et une xylanase de *Talaromyces,* dans laquelle la glucose oxydase de *Penicillium* comprend une séquence d'acides aminés ayant au moins 90% d'identité avec les acides aminés 19 à 604 de SEQ ID n° 1, et où la xylanase de *Talaromyces* comprend une séquence d'acides aminés ayant au moins 90% d'identité avec les acides aminés 23 à 408 de SEQ ID n° 3.

3. Composition selon la revendication 2, la composition comprenant en outre au moins un ingrédient de pâte.

4. Composition selon la revendication 3, dans laquelle le au moins un ingrédient de pâte comporte de la farine et/ou de l'acide ascorbique.

5. Méthode de préparation d'un produit cuit, comprenant les étapes consistant à :
a. préparer une pâte, comportant l'étape consistant à ajouter une glucose oxydase de *Penicillium* et une xylanase de *Talaromyces,* toutes deux telles que définies selon la revendication 1, à au moins un ingrédient de la pâte ; et
b. refroidir la pâte jusqu'à une température dans la plage allant de -40 à -5° Celsius, afin d'obtenir une pâte congelée ; et
c. décongeler la pâte congelée afin d'obtenir une pâte décongelée ; et
d. cuire la pâte décongelée.

6. Utilisation d'une glucose oxydase de *Penicillium* et d'une xylanase de *Talaromyces,* toutes deux telles que définies selon la revendication 1, afin d'améliorer au moins l'une des propriétés d'une pâte ayant été stockée à l'état congelé ou d'un produit cuit préparé à partir d'une pâte ayant été stockée à l'état congelé.

7. Utilisation selon la revendication 6, pour l'amélioration du volume et/ou du fendillement d'un produit cuit préparé à partir d'une pâte ayant été stockée à l'état congelé.

8. Utilisation selon la revendication 7, pour l'amélioration de la stabilité de pâte d'une pâte ayant été stockée à l'état congelé.


### SEQUENCE LISTING

<110> DSM IP Assets B.V.
<120> METHOD FOR PREPARING A DOUGH
<130> 31090-WO-PCT
<160> 4
<170> BiSSAP 1.2
<210> 1
   <211> 604
   <212> PRT
   <213> Penicillium chrysogenum
<220>
   <221> SIGNAL
   <222> 1..18
<400> 1
   Met Lys Ser Thr Ile Ile Thr Ser Ile Leu Phe Ser Val Ala Ala Val
   1               5                   10                  15
   Gln Ala Tyr Ser Pro Ala Glu Gln Ile Asp Val Gln Ser His Leu Leu
               20                  25                  30
   Ser Asp Pro Thr Lys Val Glu Gly Glu Thr Tyr Asp Tyr Val Ile Ala
           35                  40                  45
   Gly Gly Gly Leu Thr Gly Leu Thr Val Ala Ala Lys Leu Ser Glu Asn
       50                  55                  60
   Pro Lys Ile Lys Val Leu Val Ile Glu Lys Gly Phe Tyr Glu Ser Asn
   65                  70                  75                  80
   Asp Gly Pro Ile Ile Glu Asp Pro Asn Ala Tyr Gly Glu Ile Phe Gly
                   85                  90                  95
   Thr Ser Val Asp Gln Asn Tyr Leu Thr Val Pro Leu Ile Asn Asn Arg
               100                 105                 110
   Thr Gly Glu Ile Lys Ser Gly Leu Gly Leu Gly Gly Ser Thr Leu Ile
           115                 120                 125
   Asn Gly Asp Ser Trp Thr Arg Pro Asp Lys Val Gln Ile Asp Ser Trp
       130                 135                 140
   Glu Lys Val Phe Gly Met Glu Gly Trp Asn Trp Asp Asn Val Phe Gln
   145                 150                 155                 160
   Tyr Met Gln Lys Ala Glu Arg Ser Arg Pro Pro Thr Ala Ala Gln Ile
                   165                 170                 175
   Glu Ala Gly His Phe Tyr Asp Pro Ala Cys His Gly Thr Asp Gly Thr
               180                 185                 190
   Val His Ala Gly Pro Arg Asp Asn Gly Lys Pro Trp Ser Pro Leu Met
           195                 200                 205
   Arg Ala Leu Met Asn Thr Val Ser Ala Phe Gly Val Pro Val Gln Lys
       210                 215                 220
   Asp Phe His Cys Gly His Pro Arg Gly Val Ser Met Ile Pro Asn Asn
   225                 230                 235                 240
   Leu His Glu Asn Gln Ile Arg Ala Asp Ala Ala Arg Glu Trp Leu Leu
                   245                 250                 255
   Pro Asn Tyr Gln Arg Asp Asn Leu Gln Ile Leu Thr Gly Gln Lys Val
               260                 265                 270
   Gly Lys Val Leu Phe Asn Gln Thr Ala Ser Gly Pro Lys Ala Val Gly
           275                 280                 285
   Val Asn Phe Gly Thr Asn Lys Ala Val Asn Phe Asn Val Tyr Ala Lys
       290                 295                 300
   Gln Glu Val Leu Leu Ala Ala Gly Ser Ala Ile Ser Pro Leu Ile Leu
   305                 310                 315                 320
   Glu Tyr Ser Gly Ile Gly Ile Lys Ser Val Leu Asp Lys Ala Gly Val
                   325                 330                 335
   Lys Gln Leu Leu Glu Leu Pro Val Gly Leu Asn Met Gln Asp Gln Thr
               340                 345                 350
   Thr Thr Thr Val Arg Ser Arg Ala Asn Asn Ala Pro Gly Gln Gly Gln
           355                 360                 365
   Ala Ala Tyr Phe Ala Asn Phe Thr Glu Val Leu Gly Asp His Ala Ala
       370                 375                 380
   Gln Gly Ile Lys Leu Leu Asp Thr Lys Leu Asp Gln Trp Ala Glu Glu
   385                 390                 395                 400
   Thr Val Ala Arg Gly Gly Phe His Asn Val Thr Ala Leu Lys Ile Gln
                   405                 410                 415
   Tyr Glu Asn Tyr Arg Asn Trp Leu Leu Asp Glu Asp Val Ala Phe Ala
               420                 425                 430
   Glu Leu Phe Phe Asp Thr Glu Gly Lys Ile Asn Phe Asp Ile Trp Asn
           435                 440                 445
   Leu Ile Pro Phe Thr Arg Gly Ser Val His Ile Leu Ser Ser Asp Pro
       450                 455                 460
   Tyr Leu Trp Gln Tyr Ala Asn Asp Pro Lys Phe Phe Met Asn Glu Leu
   465                 470                 475                 480
   Asp Leu Leu Gly Gln Ala Ala Ala Thr Lys Leu Gly Arg Glu Leu Ser
                   485                 490                 495
   Ser Ala Gly Glu Met Lys Lys Tyr Tyr Ala Gly Glu Thr Ile Pro Gly
               500                 505                 510
   Asp Asn Leu Pro Gln Asp Ala Thr Val Glu Gln Trp Glu Asp Tyr Val
           515                 520                 525
   Met Met Asn Phe Arg Pro Asn Trp His Ala Val Ser Thr Cys Ser Met
       530                 535                 540
   Met Ser Arg Glu Leu Gly Gly Val Val Asp Ala Thr Ala Lys Val Tyr
   545                 550                 555                 560
   Gly Thr Gln Gly Leu Arg Val Ile Asp Gly Ser Ile Pro Pro Thr Gln
                   565                 570                 575
   Val Ser Ser His Val Met Thr Val Phe Tyr Gly Met Ala Leu Arg Ile
               580                 585                 590
   Ala Glu Ser Val Leu Glu Asp Tyr Ala Lys Lys Ala
           595                 600
<210> 2
   <211> 1816
   <212> DNA
   <213> Penicillium chrysogenum
<220>
   <221> source
   <222> 1..1816
   <223> /organism="Penicillium chrysogenum" /mol_type="unassigned DNA"
<220>
   <221> sig_peptide
   <222> 1..54
<220>
   <221> terminator
   <222> 1813..1816
<400> 2
   atgaagtcca ctattatcac ctccattctc ttctctgtgg ctgccgtcca ggcctatagc      60
   ccggccgagc agatcgacgt ccagtctcac ctgctttctg accccaccaa ggtcgaggga     120
   gagacttacg actatgtcat tgctggtggt ggtttgactg gtctgaccgt ggctgccaag     180
   ctgtctgaaa acccgaagat caaagtcctt gtgattgaga agggattcta cgaatccaac     240
   gatggaccga tcatcgagga ccccaacgcc tatggggaga tctttggaac tagtgtggat     300
   cagaattatc tcacagttcc cctcatcaac aaccgaactg gggaaattaa gtctggcctc     360
   ggtcttggtg gctcgacctt gatcaacggc gattcctgga cccgccccga caaggtccag     420
   atcgactcat gggaaaaggt ctttggcatg gagggctgga actgggacaa tgtcttccag     480
   tacatgcaga aagctgagcg ctcgcgcccc ccgactgccg cccagattga agccggtcac     540
   ttctacgacc ctgcctgtca tggaacagac ggaaccgttc atgccggccc tcgcgacaac     600
   ggcaagcctt ggtccccact gatgcgagcc ctcatgaaca ccgtctccgc tttcggtgtc     660
   cccgtccaga aggacttcca ctgcggtcac ccccgtggtg tctcgatgat cccgaacaac     720
   ctccatgaga accagatccg ggctgatgcc gctcgcgaat ggcttcttcc caactaccag     780
   cgcgataacc tgcagatcct gactggccag aaggtcggaa aggttttgtt caaccagacc     840
   gcatctggac ctaaggctgt tggtgtgaac ttcggtacca acaaggctgt taacttcaat     900
   gtctacgcca agcaagaagt tctgttggcc gccggatctg ccatttctcc tttgatcctt     960
   gaatactccg gtattggtat caagtccgtc cttgacaagg ccggtgttaa gcagctcctc    1020
   gaactccctg ttggtctcaa catgcaagac cagaccacta ccactgttcg gtcccgcgcc    1080
   aacaacgcac ctggacaagg ccaggccgct tactttgcca acttcaccga ggttctcggc    1140
   gaccacgccg cccagggtat taagttgctg gacaccaagc ttgaccagtg ggccgaggag    1200
   accgttgccc gcggtggctt ccacaatgtg actgccctca agatccagta tgagaactac    1260
   cgtaactggc tccttgatga ggacgttgca tttgccgagc tcttcttcga cactgagggc    1320
   aagatcaact ttgatatctg gaatcttatc cccttcactc gcggttccgt ccacatcctc    1380
   agcagtgacc cttacctctg gcaatacgca aatgacccca agttcttcat gaacgagctg    1440
   gatcttctcg gccaggccgc tgctactaag ctgggtcgtg agctctctag cgctggtgag    1500
   atgaagaagt actacgctgg cgagaccatc cccggcgaca acctgcccca ggatgccacc    1560
   gtcgagcagt gggaggacta cgtgatgatg aacttccgtc ctaactggca cgctgttagc    1620
   acctgctcta tgatgtcccg cgagcttggt ggtgtcgtcg acgctactgc caaggtctac    1680
   ggtactcagg gcctccgtgt cattgacgga tctatccctc ccactcaggt gtcctctcac    1740
   gttatgaccg ttttctacgg tatggccttg cggatcgccg aatccgtcct tgaagactat    1800
   gccaagaaag cttaaa                                                    1816
<210> 3
   <211> 408
   <212> PRT
   <213> Talaromyces emersonii
<220>
   <221> SIGNAL
   <222> 1..22
<400> 3
   Met Val Arg Leu Ser Pro Val Leu Leu Ala Ser Ile Ala Gly Ser Gly
   1               5                   10                  15
   Leu Pro Leu Ala Gln Ala Ala Gly Leu Asn Thr Ala Ala Lys Ala Ile
                   20                  25                  30
   Gly Leu Lys Tyr Phe Gly Thr Ala Thr Asp Asn Pro Glu Leu Ser Asp
           35                  40                  45
   Thr Ala Tyr Glu Thr Gln Leu Asn Asn Thr Gln Asp Phe Gly Gln Leu
       50                  55                  60
   Thr Pro Ala Asn Ser Met Lys Trp Asp Ala Thr Glu Pro Glu Gln Asn
   65                  70                  75                  80
   Val Phe Thr Phe Ser Ala Gly Asp Gln Ile Ala Asn Leu Ala Lys Ala
                   85                  90                  95
   Asn Gly Gln Met Leu Arg Cys His Asn Leu Val Trp Tyr Asn Gln Leu
                   100                 105                 110
   Pro Ser Trp Val Thr Ser Gly Ser Trp Thr Asn Glu Thr Leu Leu Ala
           115                 120                 125
   Ala Met Lys Asn His Ile Thr Asn Val Val Thr His Tyr Lys Gly Gln
       130                 135                 140
   Cys Tyr Ala Trp Asp Val Val Asn Glu Ala Leu Asn Asp Asp Gly Thr
   145                 150                 155                 160
   Tyr Arg Ser Asn Val Phe Tyr Gln Tyr Ile Gly Glu Ala Tyr Ile Pro
                   165                 170                 175
   Ile Ala Phe Ala Thr Ala Ala Ala Ala Asp Pro Asn Ala Lys Leu Tyr
                   180                 185                 190
   Tyr Asn Asp Tyr Asn Ile Glu Tyr Pro Gly Ala Lys Ala Thr Ala Ala
           195                 200                 205
   Gln Asn Leu Val Lys Leu Val Gln Ser Tyr Gly Ala Arg Ile Asp Gly
       210                 215                 220
   Val Gly Leu Gln Ser His Phe Ile Val Gly Glu Thr Pro Ser Thr Ser
   225                 230                 235                 240
   Ser Gln Gln Gln Asn Met Ala Ala Phe Thr Ala Leu Gly Val Glu Val
                   245                 250                 255
   Ala Ile Thr Glu Leu Asp Ile Arg Met Gln Leu Pro Glu Thr Glu Ala
                   260                 265                 270
   Leu Leu Thr Gln Gln Ala Thr Asp Tyr Gln Ser Thr Val Gln Ala Cys
           275                 280                 285
   Ala Asn Thr Lys Gly Cys Val Gly Ile Thr Val Trp Asp Trp Thr Asp
       290                 295                 300
   Lys Tyr Ser Trp Val Pro Ser Thr Phe Ser Gly Tyr Gly Asp Ala Cys
   305                 310                 315                 320
   Pro Trp Asp Ala Asn Tyr Gln Lys Lys Pro Ala Tyr Glu Gly Ile Leu
                   325                 330                 335
   Thr Gly Leu Gly Gln Thr Val Thr Ser Thr Thr Tyr Ile Ile Ser Pro
                   340                 345                 350
   Thr Thr Ser Val Gly Thr Gly Thr Thr Thr Ser Ser Gly Gly Ser Gly
           355                 360                 365
   Gly Thr Thr Gly Val Ala Gln His Trp Glu Gln Cys Gly Gly Leu Gly
       370                 375                 380
   Trp Thr Gly Pro Thr Val Cys Ala Ser Gly Tyr Thr Cys Thr Val Ile
   385                 390                 395                 400
   Asn Glu Tyr Tyr Ser Gln Cys Leu
                   405
<210> 4
   <211> 1227
   <212> DNA
   <213> Talaromyces emersonii
<220>
   <221> source
   <222> 1..1227
   <223> /organism="Talaromyces emersonii" /mol_type="unassigned DNA"
<220>
   <221> sig_peptide
   <222> 1..66
<220>
   <221> terminator
   <222> 1225..1227
<400> 4
   atggttcgcc tcagtccagt cttgctcgcc tccatcgcag gctctggcct gcctctagcc      60
   caagcagcag gcctcaacac agccgccaaa gccatcggcc tgaaatactt tggcacagcg     120
   accgacaacc ccgagctgag cgacaccgcg tacgagacgc agctcaacaa cacgcaggat     180
   ttcgggcagt tgacgccggc gaattcgatg aagtgggatg ccaccgagcc cgagcagaat     240
   gtcttcacgt ttagcgccgg cgatcagatt gccaacttgg ccaaggcgaa tggccagatg     300
   ttgcggtgtc ataatcttgt ttggtacaat cagttgccgt cgtgggtcac cagtggctcc     360
   tggaccaacg agacgctgct tgctgccatg aagaatcaca tcaccaacgt cgttacccat     420
   tacaagggcc agtgctacgc atgggatgtc gttaatgagg ccctcaacga cgacggcacc     480
   taccgcagca acgtcttcta ccagtacatc ggtgaggcgt acatccccat cgccttcgcg     540
   acggccgccg ccgccgaccc caacgccaag ctgtactaca acgactacaa catcgagtac     600
   ccgggggcca aggcgacggc ggcgcagaac ctggtcaagc tggtgcagtc gtacggcgcg     660
   cgcatcgacg gcgtcggcct gcagtcgcac ttcatcgtgg gcgagacgcc cagcaccagc     720
   tcccagcagc agaacatggc cgccttcacg gcgctgggcg tcgaggtcgc catcaccgag     780
   ctcgacatcc gcatgcagct gcccgagacg gaagccctgc tgacgcagca ggccaccgac     840
   taccagagca ccgtgcaggc ctgcgccaac accaagggct gcgtcggcat caccgtctgg     900
   gactggaccg acaagtactc gtgggtgccc agcaccttct cgggctatgg cgacgcctgt     960
   ccctgggacg ccaactacca gaagaagccc gcgtacgaag gcatcctcac tgggcttgga    1020
   cagacggtca ccagcaccac ctacatcatc tcgccgacga cgtctgtcgg aacgggcacg    1080
   acgacctcga gcggcggaag cggcggcacg actggcgtgg cccagcattg ggagcagtgc    1140
   ggtggactgg gctggactgg tccgacggtt tgcgcaagtg gctacacttg cactgtcatc    1200
   aatgagtatt actcgcagtg tctgtaa                                         1227